(19) Europäisches Patentamt
European Patent Office
Office européen des brevets

(11) **EP 4 198 864 A1**

(12) **EUROPEAN PATENT APPLICATION**
published in accordance with Art. 153(4) EPC

(43) Date of publication:
**21.06.2023 Bulletin 2023/25**

(51) International Patent Classification (IPC):
***G06Q 30/06*** (2023.01)

(21) Application number: **21855640.5**

(86) International application number:
**PCT/CN2021/112612**

(22) Date of filing: **13.08.2021**

(87) International publication number:
**WO 2022/033590 (17.02.2022 Gazette 2022/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.08.2020 CN 202010819808**

(71) Applicant: **Beijing Wodong Tianjun Information Technology Co.,**
**Ltd.**
**100176 Beijing (CN)**

(72) Inventors:
• **YUE, Xiaoli**
  **Beijing 100176 (CN)**
• **ZHANG, Lijian**
  **Beijing 100176 (CN)**

(74) Representative: **Barker Brettell LLP**
**100 Hagley Road**
**Edgbaston**
**Birmingham, West Midlands B16 8QQ (GB)**

(54) **USER FEATURE-BASED PAGE DISPLAY METHOD AND APPARATUS, MEDIUM, AND ELECTRONIC DEVICE**

(57)     A user feature-based page display method and apparatus, a medium, and an electronic device. The method comprises: when it is necessary to recommend a product to a certain user, obtaining label data representing a feature of the user; according to the label data, calculating the similarity between the user and each user group among multiple user groups obtained in advance; then, on the basis of the similarity, selecting from among multiple user groups one or more target user groups having the highest similarity to the user; then obtaining page modules corresponding to the target user groups; then, on a recommendation page shown to the user, recommending information of products respectively by means of said page modules, each page module clustering products having one attribute. By considering the features of the user, a product corresponding to the most similar user group is recommended to the user, which is closer to the preferences of the user. Moreover, products can be dynamically recommended for different users without the need to separately create material pictures, which is simple to implement.

FIG. 1

## Description

This application claims priority to Chinese Patent Application No. 202010819808.8, filed with China National Intellectual Property Administration on August 14, 2020 and titled "USER FEATURE-BASED PAGE DISPLAYING METHOD AND APPARATUS, MEDIUM, AND ELECTRONIC DEVICE", the entire contents of which are incorporated herein by reference.

## TECHNICAL FIELD

The present application relates to the field of big data analysis technology, and particularly to a user feature-based page displaying method and apparatus, a medium, and an electronic device.

## BACKGROUND

With the rapid development of Internet technology, it has become routine for users to purchase products through online shopping. There are a large number of products on shopping websites. For a user, screening is time-consuming. Therefore, many shopping websites or online shopping applications provide product recommendation.
At present, product recommendations are mainly carried out through landing pages. Most landing pages are manually constructed relying on landing page tools. A corresponding landing page is obtained upon completion of page construction after making material pictures, selecting a component, uploading a product sku, and adjusting a page structure. After a user opens a web page or enables an application, the landing page will be displayed, or for a user who has subscribed to recommendation, the landing page will be pushed to recommend products to the user.
However, the current product recommendation is complicated to implement, and landing cost is high; moreover, different users need different products, so users still need much time to screen products in light of the recommendation in the scheme mentioned above.

## SUMMARY

Embodiments of the present application provides a user feature-based page displaying method and apparatus, a medium and an electronic device, so as to solve the problem in the related art that the current product recommendation is complicated to implement, landing cost is high, and a user needs much time to screen products.
In a first aspect, an embodiment of the present application provides a user feature-based page displaying method, including:

acquiring label data of a user, where the label data is used to represent a feature of the user;
calculating, according to the label data, a similarity between the user and each user group acquired in advance; where each user group is used to represent a class of users;
acquiring at least one target user group according to the similarity between the user and each user group, where a similarity between the at least one target user group and the user is greater than a similarity between another user group and the user;
acquiring at least one page module corresponding to the at least one target user group;
displaying the at least one page module on a recommendation page corresponding to the user, where each page module includes information of at least one product.

In a specific implementation, a clustering attribute of the product in each page module is further displayed on the recommendation page.
Optionally, where the clustering attribute at least includes: a selected product, a hot selling product, a highly praised product, or a newly launched product.
In a specific implementation, the calculating, according to the label data, the similarity between the user and each user group acquired in advance includes:

for each user group, calculating a cosine similarity between the label data and feature information of the user group by using a cosine similarity calculation mode, where the similarity between the user and the user group includes the cosine similarity.

In a specific implementation, the calculating the cosine similarity between the label data and the feature information of the user group by using the cosine similarity calculation mode includes:

calculating and acquiring the cosine similarity between the label data and the feature information of the user group by using a cosine similarity formula:

$$sim\left(u_j^A, u_j\right) = \cos(\theta) = \frac{u_j^A \cdot u_j}{\| u_j^A \| \| u_j \|}$$

where $u_j$ represents the feature information of the user group; $u_j^A$ represents the label data of user A, and j represents the number of features.

In a specific implementation, the acquiring, according to the similarity between the user and each user group, the at least one target user group includes:

performing sorting on the similarity between the user and each user group in a descending order or in an ascending order, and acquiring, starting from the largest similarity, at least one target similarity which is largest;
acquiring, according to the at least one target similarity, at least one corresponding target user group.

In a specific implementation, the number of target user groups is determined according to the recommendation page.

In a specific implementation, the acquiring the label data of the user includes:

acquiring, upon reception of a page acquisition request carrying identity information of the user, historical consumption data of the user according to the identity information of the user;
acquiring the label data of the user according to the historical consumption data.

In a specific implementation, the acquiring the label data of the user includes:

acquiring the historical consumption data of the user according to the identity information, of the user who subscribes to page recommendation, in page recommendation subscription information;
acquiring the label data of the user according to the historical consumption data.

In a specific implementation, the method further includes:
acquiring, according to channel information visited by the user, the recommendation page corresponding to the channel information, where at least one page module is displayable on the recommendation page.

In another specific implementation, the method further includes:

acquiring, according to labeled user data, a label feature vector of each user, where the label feature vector includes a plurality of labels corresponding to the user;
clustering users according to the feature vector of each user to obtain a plurality of user groups;
for each user group, calculating, according to the feature vector of each user in the user group, feature information corresponding to the user group by using a CBOW model.

In another specific implementation, the method further includes:

performing page module configuration according to clustering attributes of a plurality of products, to obtain a plurality of page modules;
establishing and storing, according to the feature information of each user group, a mapping relationship between the page module and the user group.

In yet another specific implementation, the acquiring the at least one page module corresponding to the at least one target user group includes:
acquiring, according to the mapping relationship between the page module and the user group, the at least one page module corresponding to the at least one target user group.

In a second aspect, an embodiment of the present application provides a user feature-based page displaying apparatus, including:

an acquiring module, configured to acquire label data of a user, where the label data is used to represent a feature of the user;
a processing module, configured to calculate, according to the label data, a similarity between the user and each user group acquired in advance; where each user group is used to represent a class of users;
the processing module is further configured to acquire at least one target user group according to the similarity between the user and each user group, where a similarity between the at least one target user group and the user is greater than a similarity between another user group and the user;
the processing module is further configured to acquire at least one page module corresponding to the at least one target user;
an interaction module, configured to display the at least one page module on a recommendation page corresponding to the user, where each page module includes information of at least one product.

In a third aspect, an embodiment of the present application provides an electronic device, including:

a processor, a memory, and an interface;
where the memory is configured to store executable instructions of the processor;
and where the processor is configured to execute the user feature-based page displaying method described in any item of the first aspect by executing the executable instructions.

In a fourth aspect, an embodiment of the present application provides a storage medium on which a computer program is stored. When the computer program is executed by a processor, the user feature-based page displaying method described in any item of the first aspect is implemented.

In a fifth aspect, an embodiment of the present application provides a chip. The chip includes a memory and a processor, where the memory stores codes and data, the memory is coupled with the processor, and the processor runs a program in the memory, so that the chip is configured to perform the user feature-based page displaying method described in any item of the first aspect.

In a sixth aspect, an embodiment of the present application provides a program product, including: a computer program. The program product, when running on a computer, causes the computer to execute the user feature-based page displaying method described in any item of the first aspect.

Embodiments of the present application provide a user feature-based page displaying method and apparatus, a medium and an electronic device. When it is necessary to perform product recommendation to a user, label data representing a feature of the user is acquired; a similarity between the user and each user group of a plurality of user groups obtained in advance is calculated according to the label data; then, based on the similarity, one or more target user groups having the highest similarity to the user is selected from the plurality of user groups; and then page modules corresponding to these target user groups are acquired; then, on a recommendation page displayed to the user, product information is recommend through these page modules respectively, where each page module clusters products having one attribute. With consideration of a feature of a user, a product corresponding to a user group that is most similar to the user is recommended to the user, which highly caters to the user's preference. Products can be dynamically recommended for different users with no need to make separate material pictures, which is simple to implement.

## BRIEF DESCRIPTION OF DRAWINGS

In order to illustrate technical solutions in embodiments of the present application or the related art more clearly, accompanying drawings that need to be used in description of the embodiments or the related art will be briefly introduced below. It is obvious that the accompanying drawings in the following description are for some embodiments of the present application, and for those of ordinary skill in the art, other accompanying drawings may also be acquired according to these accompanying drawings without any creative effort.

FIG. 1 is a flow diagram of a first embodiment of a user feature-based page displaying method according to an embodiment of the present application.
FIG. 2 is a schematic diagram of a recommendation page according to an embodiment of the present application.
FIG. 3 is a schematic diagram showing an overall architecture of page displaying according to the present application.
FIG. 4 is a flow diagram of a second embodiment of a user feature-based page displaying method according to an embodiment of the present application.
FIG. 5 is a schematic diagram showing One-Hot representation of a user's label feature vector according to an embodiment of the present application.
FIG. 6 is a schematic diagram of word2vec representing user features according to an embodiment of the present application.
FIG. 7 is a flow diagram of a third embodiment of a user feature-based page displaying method according to an embodiment of the present application.
FIG. 8 is a structural diagram of a first embodiment of a user feature-based page displaying apparatus according to an embodiment of the present application.

FIG. 9 is a structural diagram of an electronic device according to an embodiment of the present application.

## DESCRIPTION OF EMBODIMENTS

In order to make objectives, technical solutions and advantages of embodiments of the present application clearer, the technical solutions in the embodiments of the present application will be described clearly and completely in conjunction with the accompanying drawings in the embodiments of the present application. Obviously, the described embodiments are a part of the embodiments of the present application, not all of the embodiments of the present application. Based on the embodiments in the present application, all other embodiments made by those of ordinary skill in the field under the inspiration of the embodiments should fall within the protection scope of the present application.

The terms "first", "second", "third", "fourth" and the like (if any) in the description and the claims and the above accompanying drawings of the present application are used to distinguish similar objects, and not necessarily to describe a particular order or sequence. It should be understood that the data so used can be interchanged in appropriate cases, so that embodiments of the present application described herein can be implemented in an order other than those illustrated or described herein. In addition, the terms "including", "having" and any variations thereof are intended to cover non-exclusive inclusion. For example, processes, methods, systems, products or devices that contain a series of steps or units need not be limited to those steps or units that are clearly listed, but can include other steps or units that are not clearly listed or are inherent to these processes, methods, products or devices.

With the rapid development of Internet technology, the scope of advertising business has gradually expanded, and a landing page of an advertisement has attracted more and more attention. The landing page of the advertisement, that is, a page displayed to a user, can also be called a recommendation page. The existing technology requires manual construction for a landing page, so that a corresponding landing page is obtained upon completion of page construction after making material pictures, selecting a component, uploading a product, and adjusting a page structure.

However, such product recommendation is complicated to implement, and landing cost is high; moreover, different users need different products, so users still need much time to screen products in light of the recommendation in the scheme mentioned above.

A landing page of an advertisement usually refers to a directed page after a user clicks a webpage or a video. The landing page is mainly used to recommend appropriate products to users, facilitate users to purchase products, and improve the seller's product trading efficiency. With the continuous rise of big data, in order to reduce the cost of an advertiser to make a landing page, smart landing pages have gradually entered our vision. Each smart landing page is provided with a module for page displaying; then products in a store (or products) are classified in different dimensions, for example, products are selected in terms of sales volume, positive comments, new arrival or other dimensions, and they are filled into corresponding modules. That is, products of each floor in the page are aggregated according to a floor property, and then sorted according to an estimated click rate to form a completed smart landing page. Page rendering and theme color matching of the front end are fixed, and the hierarchical structure and the order of modules of the page are also fixed.

In view of the above situation, the present application provides a user feature-based page displaying method. The core idea of this solution is a technical solution of dynamically displaying smart landing pages based on users' label data. With a known preference from the users for a page module and an acquired feature of the users, or based on some important factors of media channel information, the dynamic display of recommendation pages to users is accomplished in a module level, so that each user acquires a varied and new recommendation page. At the same time, the effect of recommending products to users is improved. With this smart way, the implementation process is simple and the cost is low, and the problem that it is difficult to compare recommendation pages can be solved.

Next, the user feature-based page displaying solution provided by the present application will be described in detail through several specific embodiments.

This solution can be applied to a shopping website or a merchant's server or other service platforms, or it can also be applied to a cloud platform where a user's account information, historical consumption records and other historical data can be acquired, or applied to other electronic devices. There is no restriction on this solution.

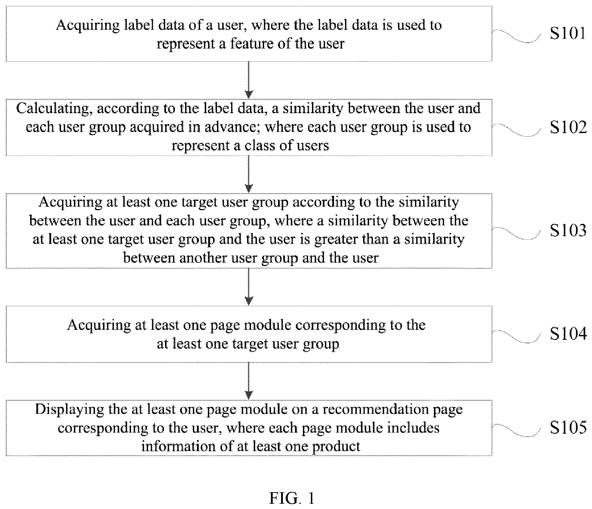

FIG. 1 is a flow diagram of a first embodiment of a user feature-based page displaying method according to an embodiment of the present application. As shown in FIG. 1, the user feature-based page displaying method specifically includes the following steps.

S101: acquiring label data of a user, where the label data is used to represent a feature of the user.

In this step, when it is necessary to recommend product information to a user, the user's label data needs to be acquired, that is, some labels that can represent the user's features, which can be label data obtained from one or more labels. In general, a label or a feature is a specific word, which cannot be directly calculated. Therefore, each word can be identified as a numerical word vector to form the label data here.

In a specific implementation of this solution, the above label data can be obtained by profiling following acquisition of some data of the user according to the user's identity information (such as login account, or cookie information can also be used), or for users who have not logged in, the above label data can be obtained by using the device dimension profile data storage table (mainly for users outside the site).

In another specific implementation of this solution, if the solution is applied to a webpage or an application (such as a shopping website, a shopping application, etc.), a server acquires user label data for page recommendation, which includes at least the following scenarios: registered users subscribe to product recommendation, or page recommendation functions; or, users authorize to allow a platform to recommend products; or, a product recommendation is made after a user enters the application, or the user clicks from an advertisement to enter a recommendation page. In these scenarios, it is necessary to acquire the user's label data. The following is an example of acquiring the user's label data:

In a first implementation, after the user clicks an advertisement or a pushed notification, the server, when receiving a page acquisition request carrying the user's identity information, acquires the user's historical consumption data according to the user's identity information and acquires the user's label data according to the historical consumption data. That is, under the trigger by the user, the historical consumption data is acquired according to the user's identity information, and the historical consumption data is analyzed to acquire the user's label data.

In a second implementation, if the user subscribes to the recommendation information, when the preset recommendation time arrives, it is possible to acquire the historical consumption data of the user according to the identity information, of the user who subscribes to page recommendation, in page recommendation subscription information, and acquire the label data of the user according to the historical consumption data. Similar to the above, the historical consumption data is acquired according to the user's identity information also, so that the user's label data is obtained through analysis.

S 102: calculating, according to the label data, a similarity between the user and each user group acquired in advance; where each user group is used to represent a class of users.

In this step, after the user's label data is obtained, it is necessary to determine which user group the user is closer to or belongs to, so that an appropriate page module can be selected subsequently based on the user group to recommend products to the user.

In this solution, the similarity between the user and each user group is calculated based on the label data, and a same user group is used to represent a class of users. In a specific calculation, a final similarity value can be calculated according to feature information of the user group and the label data.

S103: acquiring at least one target user group according to the similarity between the user and each user group, where a similarity between the at least one target user group and the user is greater than a similarity between another user group and the user.

In this step, after calculating the respective similarity between the user and each user group, it is necessary to acquire one or more user groups that are most similar to the user as a target user group. The specific number of target user groups can be determined according to the number of page modules that can be placed on the recommendation page, and the specific number is not limited.

In an implementation, sorting can be performed on the similarity between the user and each user group in a descending order or in an ascending order, and starting from the largest similarity, at least one target similarity which is largest can be acquired; and at least one corresponding target user group can be acquired according to the at least one target similarity.

The meaning of this solution is to select, from a plurality of user groups, one or more user groups having the highest similarity to the user, as the target user group(s)

S104: acquiring at least one page module corresponding to the at least one target user group.

In this step, after obtaining one or more target user groups, page modules corresponding to these target user groups can be determined according to a predetermined relationship between the user groups and the page modules. Page modules are attribute pages associated with features of users in the user groups. For example, according to consumption habits or records of some users, it can be determined that such users like highly praised products, and some users like to buy new products. This solution is implemented in the premise that users are classified through the analysis of big data, i.e., classified into fixed user groups, the consumption history data or historical browsing data of users in each user group is clustered, and a corresponding page module is configured so as to correspond the page module with the user group.

S105: displaying the at least one page module on a recommendation page corresponding to the user, where each page module includes information of at least one product.

In this step, after selecting the at least one page module, these page modules can be displayed on the recommendation page pushed to the user, and the page module includes information about one or more products.

Optionally, in a specific implementation of this solution, it is preferred to firstly acquire the recommendation page, so that these page modules can be displayed on the recommendation page. Generally speaking, the framework of the recommendation page can be configured in advance, which can be read directly when in use. The corresponding page module(s) can be laid out in the recommendation page. However, the recommendation page finally presented to the user varies in an application on a mobile terminal, or a browser on a PC end, or other scenarios. Therefore, in the implementation of this step, it is also necessary to acquire the user's visiting channel, that is, acquire the user's channel information. Then, acquire the recommendation page corresponding to the channel information according to the channel information visited by the user. It should be understood that the recommendation page layout obtained and the number of page modules that can be arranged may remain the same or vary in different visiting channels. There is no restriction on this solution.

When multiple page modules are obtained, these page modules may be arranged on the recommendation page in a preset rule or they may be arranged immediately. There is no restriction on this solution. For example, a page module corresponding to a target user group with a highest similarity can be arranged at the forefront according to a descending order of similarities to the user. There is no restriction on this solution.

In a specific implementation of this solution, the recommendation pages displayed to different users are different. With the change of users' consumption habits, these landing recommendation pages are not invariable, and the solution of dynamically displaying page modules to users can be realized.

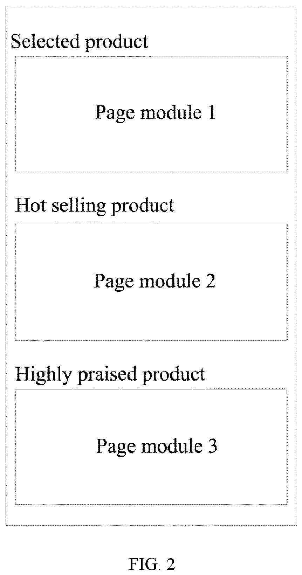

FIG. 2 is a schematic diagram of a recommendation page according to an embodiment of the present application. As shown in FIG. 2, in this recommendation page, users are presented with three page modules: page module 1, page module 2, and page module 3. In each page module, information of one or more products can be recommended.

Optionally, the recommendation page can further display clustering attributes of products in different page modules, such as selected product, hot selling product, and highly praised product shown in FIG. 2. In a specific application of this solution, the clustering attribute at least includes: a selected product, a hot selling product, a highly praised product, or a newly launched product. Clustering recall can further be carried out through various attributes such as sales volume, discount, limited time offering, lightening deals, special user exclusivity, etc. There is no restriction on this solution.

According to the user feature-based page displaying method provided in the present application, when it is necessary to perform product recommendation to a user, label data representing a feature of the user is acquired; a similarity between the user and each user group of a plurality of user groups obtained in advance is calculated according to the label data; then, based on the similarity, one or more target user groups having the highest similarity to the user is selected from the plurality of user groups; and then page modules corresponding to these target user groups are acquired; then, on a recommendation page displayed to the user, product information is recommend through these page modules respectively, where each page module clusters products having one attribute. With consideration of a feature of a user, a product corresponding to a user group that is most similar to the user is recommended to the user, which highly caters to the user's preference. Products can be dynamically recommended for different users with no need to make separate material pictures, which is simple to implement.

On the basis of the above embodiments, it can be seen from the user feature-based page displaying method provided by this solution that, there is a certain mapping relationship between the page module in the recommendation page and the user group (that is, the user). The user's label data is also called user profile data, which can be stored in a form of a table. In all embodiments of the present application, it should be understood that words such as label data, user profile, user feature, feature label, label, label vector, or label feature vector are all used to represent a feature of the user, which are just different representations, but have similar meanings, with different forms of data being required during different processing procedures. Similarly, for user groups, feature vectors, feature information, feature data, etc. are also used to represent different forms of features of the user groups. In different processing procedures, appropriate forms can be matched. There is no restriction on this solution. The overall architecture of the solution will be explained below.

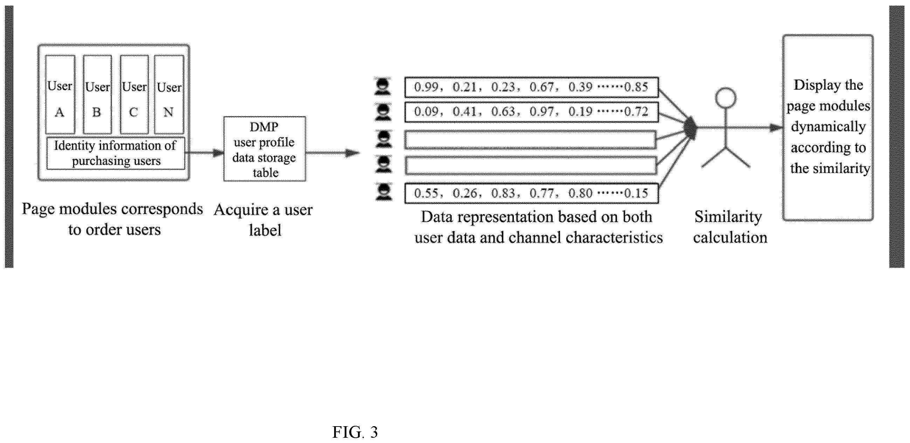

FIG. 3 is a schematic diagram showing an overall architecture of page displaying according to the present application. As shown in FIG. 3, in the whole process of the solution, it is necessary to firstly acquire identity information of a purchasing user for recommendation, and then acquire a user label from a DMP user profile data storage table, that is, the above label data. The next step is to combine the user's label data and channel feature as the user's data representation, calculate the similarity with each user group, and finally dynamically display a different page module to each user according to the similarity.

The recommendation page displayed to a user (also known as a smart landing page) is composed of page modules of a plurality of products. The products in each page module are recalled according to a certain characteristic of the products in a merchant store, such as sales volume, discount, lightening deals, positive comments, new arrival, plus exclusivity, monthly product visits and other characteristics, and corresponding page modules are, for example, best-selling sales (recalled according to product sales), limited time offering (products for flash sale and lightening deals), special discounts, etc. Each page module has a variety of front-end interface styles corresponding thereto, such as one row by one column, one row by two columns, and different visual designs (colors), etc.

Each page module has a corresponding purchasing user group, and user labels of the corresponding page module (promotion sensitivity, product discount rate preference, product evaluation sensitivity, lightening deals preference, color preference, user activity, gender, age, purchasing power, education level, etc.) can be acquired. For example, middle-aged female users are main buyers of products in one row by two columns of a special discount module, while young male users are more likely to buy products in a positive comments module.

Suppose there are N page modules in a recommendation page displayed, and each page module has M styles, then there are N*M candidate sets in total. Nm is denoted as style m of module N, and a feature set of a corresponding user group U is denoted as $B = \{b_1, b_2, b_3, ..., b_j\}$, where $b_j$ represents a feature of the user.

As shown in FIG. 3, in a specific mapping, a pin (user account) of an order user corresponding to each page module is acquired, and it is associated with a pin dimension user profile data storage table, so as to obtain feature information of the user group of the module. Accuracy and quality evaluation of label feature information are guaranteed by a DMP platform. Each feature of the user group shall be the one with the largest number of users in the group. For example, the first feature of this user group is "insensitive to promotion", which means that most users in this user group are insensitive to promotion.

In a current product recommendation scenario, inconsistent traffic situation of different channels will also affect user preferences. In order to better characterize user features and further improve the probability of recommendation, channel characteristic factor T can also be added based on users' basic label data provided by the DMP. That is, the feature information of the user group corresponding to page module N is $B = \{b_1, b_2, b_3, ..., b_j, T\}$.

Specific user data is represented as follows.

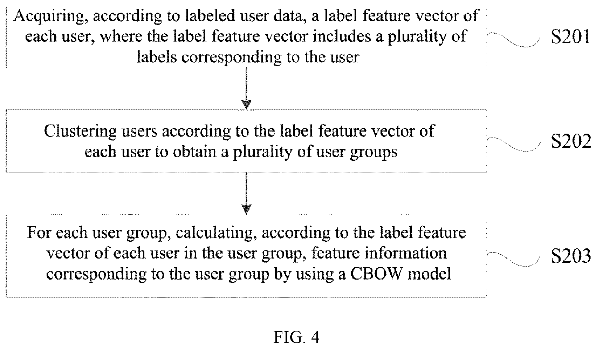

FIG. 4 is a flow diagram of a second embodiment of a user feature-based page displaying method according to an embodiment of the present application. As shown in FIG. 4, on the basis of the above embodiment, the user feature-based page displaying method further includes the following steps.

S201: acquiring, according to labeled user data, a label feature vector of each user, where the label feature vector includes a plurality of labels corresponding to the user.

S202: clustering users according to the label feature vector of each user to obtain a plurality of user groups.

In the above steps, in order to cluster users into user groups, a large amount of labeled data is required, that is, label feature vectors of many users are required for subsequent processing.

According to the labeled users' label feature vector, different users can be distinguished, that is, a plurality of user groups can be obtained by clustering according to the features. After obtaining different user groups, features of users in different user groups can be represented by one piece of feature information.

S203: for each user group, calculating, according to the feature vector of each user in the user group, feature information corresponding to the user group by using a CBOW model.

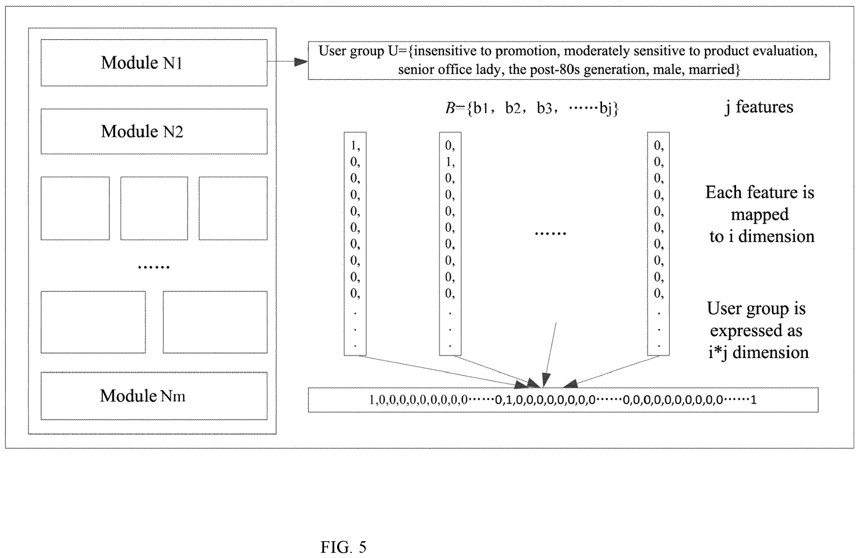

In this step, FIG. 5 is a schematic diagram showing One-Hot representation of a user's label feature vector according to an embodiment of the present application. As shown in FIG. 5, since the user label or feature is a specific word, similarity calculation cannot be directly performed, and each word needs to be represented as a numerical word vector. If there are j features, the first feature is expressed as the feature value b_1=[1,0,0,0,0,..... 0] (One Lot Vector), then the n-th feature is set as 1 at the n-th position, and each feature is represented as j dimension. Then the features of the user group U are expressed as i*j dimension.

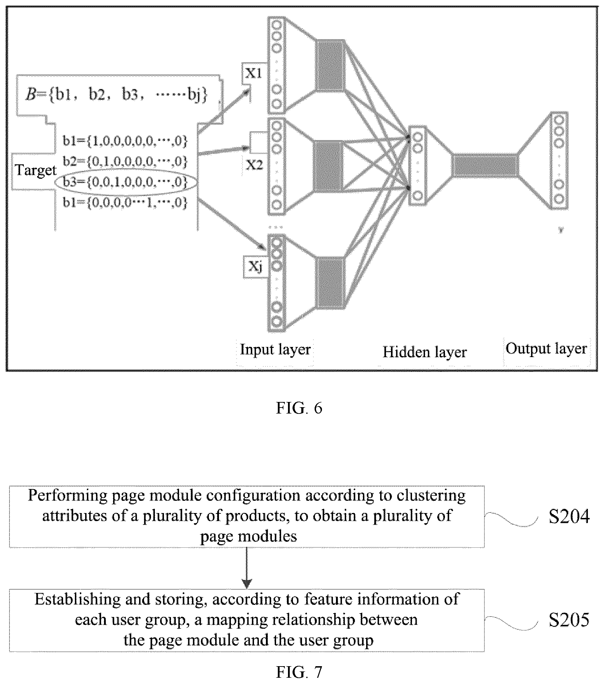

FIG. 6 is a schematic diagram of a word embedding model (word2vec) representing user features in a neural network according to an embodiment of the present application. Use the above method to represent the features of a user group as a very high-dimensional and sparse vector. In order to convert user label B of user group U corresponding to module $N_m$ from a high-dimensional sparse feature vector to a low-dimensional dense feature vector, word2vec in the neural network can be used for processing, as shown in FIG. 6. Since the data set is small and a word vector of a specific word needs to be output, a Continuous Bag-of-Words (Continuous Bag-of-Words, CBOW) model is selected. For the training, the input is a word vector corresponding to a context-related word of a particular feature word, and the output is the word vector of this specific word. If the j-th label of the user is expressed as $b_j$, its word vector is $u_j \in R^d$, where $d$ is an embedding dimension of the user label in a low dimensional space.

The input of the model is a one-hot (one-hot) vector, that is, for a given label, a weight matrix between an input layer and a hidden layer is represented by a $V \times N$ matrix W. Each row of W is a j dimension vector $v_W$ corresponding to the model input. After transposition, the i-th row of the matrix is $v_W^T$.

$$h = \frac{1}{C} W^T (b_1 + b_2 + \cdots b_i)$$

$$= \frac{1}{C} (v_{w1} + v_{w2} + \cdots v_{wi})^T$$

where C is the number of features of the context, that is, $w_1$, $w_2$, $\cdots w_i$ are feature values in the context, and $v_w$ is an input vector of word w.

There is a different matrix $W'$ between the hidden layer and the output layer. The dimension of the matrix is $N \times V$. After obtaining a hidden layer weight matrix learned from model training data, a score of each feature $u_j$ can be calculated:

$$u_j = {v'_{wj}}^T h$$

where $v'_{wj}$ is the j-th column of the weight matrix W'. The loss function is defined as:

$$E = -\log p(wi \mid w1, \cdots, wc) = -u_{j*} + \log \sum_{j'}^{V} exp\left(u_{j'}\right)$$

$$= -{v'_{wi}}^T h + \log \sum_{j'}^{V} exp\left({v'_{wj}}^T h\right)$$

The goal of processing is to minimize E, j* is an index of a real output value. Partial derivative of E is calculated to obtain the update equation of weights between the hidden layer and the output layer.

In the above way, the final feature information representing each user group can be obtained, that is, the feature vector representing the user group, with the vector being a low dimensional dense feature vector. This solution uses the word2vec model to represent user labels for user features. Unlike direct simple comparison and traditional machine learning methods, the algorithm can be updated iteratively in a continuous manner. Data representation of labels makes the module recommendation results more accurate.

FIG. 7 is a flow diagram of a third embodiment of a user feature-based page displaying method according to an embodiment of the present application. As shown in FIG. 7, on the basis of the embodiment of FIG. 4, the user feature-based page displaying method further includes the following steps.

S204: performing page module configuration according to clustering attributes of a plurality of products, to obtain a plurality of page modules.

In this step, feature information of different user groups is obtained according to the processing of big data in the above solution. In order to achieve dynamic product recommendation for different user groups, page modules corresponding to different user groups need to be configured.

In a specific implementation of this solution, by acquiring historical consumption data of users of each user group in a period of time, or all the consumption data, and by analyzing products purchased by the users, a main attribute feature of the products purchased by users in a user group is determined, an attribute of the products that the user group is most likely to purchase is obtained, and a corresponding page module is configured according to the attribute.

S205: establishing and storing, according to the feature information of each user group, a mapping relationship between the page module and the user group.

In this step, after a server or service platform obtains the feature information of each user group, it is necessary to establish a mapping relationship between the page module and the user group. Specifically, the mapping relationship can be that the page module directly corresponds to the user group, and the feature information of each group is stored. Also, the feature information of the page module and the user group can be directly mapped, and there is no restriction on this solution. In this solution, the page module is mapped to the user group, a user profile corresponding to the page module is acquired, and the presentation of the page module is disassembled in a finer granularity.

On the basis of this embodiment, in the first embodiment, step S104 for acquiring at least one page module corresponding to the at least one target user group can be specifically implemented as: acquiring, according to the mapping relationship between the page module and the user group, the at least one page module corresponding to the at least one target user group.

According to the user feature-based page displaying method provided in the above embodiments, by clustering the analysis of user features, different user groups are obtained, and different page modules are configured for different user groups. In a process of product recommendation, recommended pages are dynamically displayed based on user features and focusing on the page module dimension. While improving the page flexibility, users' eyes are captured and the page conversion rate is improved. Meanwhile, channel information is considered to further improve accuracy of recommendation.

Based on the above solution, the following introduces a specific solution to recommend products to users.

When user A visits a page and makes a request, the user's cookie information is acquired. For a user who is not logged in, the device dimension profile data storage table is used to obtain the above selected user label (main users are users outside the site), and user_log_acct (user login account) is used for a user who has logged in. Similarly, word vector embedding is carried out for an acquired label, which is denoted as $u_j^A$.

**1. Calculate a similarity between a user and a user group**

For each user group, calculating a cosine similarity between the label data and feature information of the user group by using a cosine similarity calculation mode, the similarity between the user and the user group includes the cosine similarity.

Specifically, in order to acquire a page module more suitable for User A, cosine similarity can be used to calculate a difference between User A and each user group.

$$sim\left(u_j^A, u_j\right) = \cos(\theta) = \frac{u_j^A \cdot u_j}{\| u_j^A \| \| u_j \|}$$

where $u_j$ represents the feature information of the user group; $u_j^A$ represents the label data of user A, and j represents the number of features.

If an angle between two vectors is smaller, it is determined that the two vectors are more similar, that is, user A is more likely to purchase a product of the page module $N_m$ corresponding to the user group $u_j$.

2. Dynamic display of pages

After the cosine similarity between user A and each user group is calculated, the cosine similarities are sorted in a descending order. If it is set that a page is composed of K modules, modules with a top-K probability are selected for display from top to bottom. Therefore, for each user, a different recommendation page can be displayed, so as to realize the technology of dynamical page displaying based on user labels and channel characteristics.

In particular, for users already in a dataset, in order to enable the users to have better shopping experience, the last product module on the page is a product recommendation module (recommending products you would like), and the products in the module will be recommended, in a personalized manner, according to the user label.

The user feature-based page displaying solution provided in the embodiments of the present application is intended for a technology for designing smart landing pages that can be dynamically displayed based on user labels and channel characteristics, so as to accurately reach different users, provide users with personalized and accurate product recommendations, achieve refined page operation, and improve an effect of page conversion of landing pages. For systems based on an e-commerce platform, landing pages play an important role in transformation between recommendation and ordering. However, when there are more and more channels, diverse category structures, and significantly different traffic quality, smart landing pages cannot effectively match traffic and enables page optimization. By mining user labels and channel characteristics, this solution realizes tailored service from the dimension of page modules, and dynamical display of product modules on smart landing pages, so that users in each subdivided traffic and of different types can have corresponding landing pages, thereby significantly improving user experience and increasing user stickiness, while helping merchants to better solve the "long tail" problem of products and improving a page conversion rate.

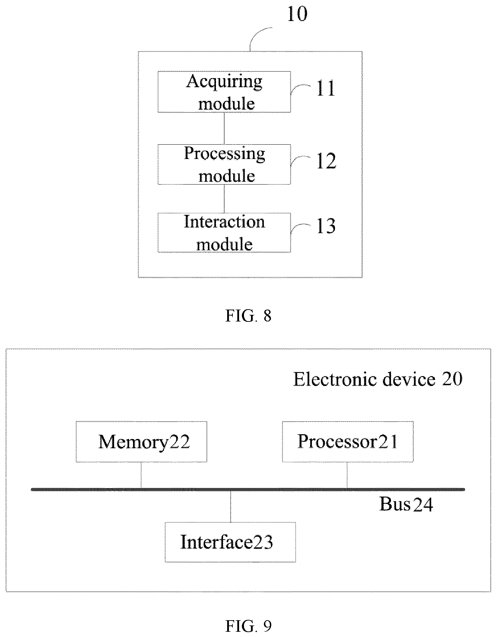

FIG. 8 is a structural diagram of a first embodiment of a user feature-based page displaying apparatus according to an embodiment of the present application. As shown in FIG. 8, a user feature-based page displaying apparatus 10 includes:

an acquiring module 11, configured to acquire label data of a user, where the label data is used to represent a feature of the user;
a processing module 12, configured to calculate, according to the label data, a similarity between the user and each user group acquired in advance; where each user group is used to represent a class of users;
the processing module 12 is further configured to acquire at least one target user group according to the similarity between the user and each user group, where a similarity between the at least one target user group and the user is greater than a similarity between another user group and the user;
the processing module 12 is further configured to acquire, according to a mapping relationship between a page module and a user group, at least one page module corresponding to the at least one target user;

an interaction module 13, configured to display the at least one page module on a recommendation page corresponding to the user, where each page module includes information of at least one product.

The user feature-based page displaying apparatus provided in this embodiment is used to implement the technical solution provided in any of the above method embodiments following similar implementation principle and producing similar technical effects. With consideration of a feature of a user, a product corresponding to a user group that is most similar to the user is recommended to the user, which highly caters to the user's preference. Products can be dynamically recommended for different users with no need to make separate material pictures, which is simple to implement.

On the basis of the above embodiments, in a specific implementation of the user feature-based page displaying apparatus 10, a clustering attribute of the product in each page module is further displayed on the recommendation page, where the clustering attribute at least includes: a selected product, a hot selling product, a highly praised product, or a newly launched product.

Optionally, the processing module 12 is specifically configured to:

for each user group, calculate a cosine similarity between the label data and feature information of the user group by using a cosine similarity calculation mode, where the similarity between the user and the user group includes the cosine similarity.

Optionally, the processing module 12 is specifically configured to:

calculate and acquire the cosine similarity between the label data and the feature information of the user group by using a cosine similarity formula:

$$sim\left(u_j^A, u_j\right) = \cos(\theta) = \frac{u_j^A \cdot u_j}{\|u_j^A\|\|u_j\|};$$

where $u_j$ represents the feature information of the user group; $u_j^A$ represents the label data of user A, and j represents the number of features.

Optionally, the processing module 12 is specifically configured to:

perform sorting on the similarity between the user and each user group in a descending order or in an ascending order, and acquire, starting from the largest similarity, at least one target similarity which is largest;
acquire, according to the at least one target similarity, at least one corresponding target user group.

Optionally, the number of target user groups is determined according to the recommendation page.

Optionally, the acquiring module 11 is specifically configured to:

acquire, upon reception of a page acquisition request carrying identity information of the user, historical consumption data of the user according to the identity information of the user;

the processing module 12 is further configured to acquire the label data of the user according to the historical consumption data.

Optionally, the acquiring module 11 is specifically configured to:

acquire the historical consumption data of the user according to the identity information, of the user who subscribes to page recommendation, in page recommendation subscription information;
the processing module 12 is further configured to acquire the label data of the user according to the historical consumption data.

The processing module 12 is specifically configured to:

acquire, according to channel information visited by the user, the recommendation page corresponding to the channel information, where at least one page module is displayable on the recommendation page.

On the basis of any of the above embodiments, the processing module 12 is further configured to:

acquire, according to labeled user data, a label feature vector of each user, where the label feature vector includes a plurality of labels corresponding to the user;
cluster users according to the feature vector of each user to obtain a plurality of user groups;
for each user group, calculate, according to the feature vector of each user in the user group, feature information corresponding to the user group by using a CBOW model.

Optionally, the processing module 12 is further configured to:

perform page module configuration according to clustering attributes of a plurality of products, to obtain a plurality of page modules;

establish and store, according to feature information of each user group, a mapping relationship between the page module and the user group.

Optionally, the processing module 12 is specifically configured to:
acquire, according to the mapping relationship between the page module and the user group, the at least one page module corresponding to the at least one target user group.

The user feature-based page displaying provided by any of the above embodiments is used to realize the technical solution of any of the above embodiments following similar implementation principles and producing similar technical effects, which will not be repeated here.

FIG. 9 is a structural diagram of an electronic device according to an embodiment of the present application. As shown in FIG. 9, an electronic device 20 provided in the embodiment includes:

a processor 21, a memory 22, and an interface 23;

where the memory 22 is configured to store executable instructions of the processor, and the memory 22 may also be a flash (flash memory);

and where the processor 21 is configured to execute each step of the above method by executing the executable instructions. For details, please refer to the relevant description in the previous method embodiments.

Optionally, the memory 22 can be either independent or integrated with the processor 21.

When the memory 22 is a component independent of the processor 21, the electronic device may further include: a bus 24, configured to connect the processor 21, the memory 22 and the interface 23. The interface 23 includes a communication interface for data transmission, a display interface or an operation interface for human-computer interaction, etc.

An embodiment further provides a readable storage medium in which a computer program is stored. When at least one processor of an electronic device executes the computer program, the electronic device executes the user feature-based page displaying method provided in various embodiments above.

An embodiment further provides a program product, which includes a computer program stored in a readable storage medium. At least one processor of an electronic device can read the computer program from the readable storage medium, and at least one processor executes the computer program so that the electronic device implements the user feature-based page displaying method provided in various embodiments above.

An embodiment further provides a chip, which includes a memory and a processor. The memory stores codes and data therein, the memory is coupled with the processor, and the processor runs a program in the memory, so that the chip is configured to perform the user feature-based page displaying method provided in various embodiments above.

It can be understood by those skilled in the art that: all or part of the steps to implement the above method embodiments can be completed through hardware related to program instructions. The above program can be stored in a computer readable storage medium. When the program is executed, the steps including the embodiments of the above methods are executed; the above storage medium includes: a ROM, a RAM, a magnetic disc or an optical disc or other media that can store program codes.

Finally, it should be noted that: the above embodiments are only used to explain the technical solution of the present application, not to limit it. Although the present application has been described in detail with reference to the above embodiments, those skilled in the art should understand that: they can still modify the technical solutions recorded in the above embodiments, or equivalently replace some or all of the technical features. However, these modifications or substitutions do not make the essence of the corresponding technical solutions deviate from the scope of the technical solutions of the embodiments of the present application.

**Claims**

1. A user feature-based page displaying method, comprising:

acquiring label data of a user, wherein the label data is used to represent a feature of the user;
calculating, according to the label data, a similarity between the user and each user group acquired in advance; wherein each user group is used to represent a class of users;
acquiring at least one target user group according to the similarity between the user and each user group, wherein a similarity between the at least one target user group and the user is greater than a similarity between another user group and the user;

acquiring at least one page module corresponding to the at least one target user group;

displaying the at least one page module on a recommendation page corresponding to the user, wherein each page module comprises information of at least one product.

2. The method according to claim 1, wherein a clustering attribute of the product in each page module is further displayed on the recommendation page.

3. The method according to claim 1 or 2, wherein the calculating, according to the label data, the similarity between the user and each user group acquired in advance comprises:

for each user group, calculating a cosine similarity between the label data and feature information of the user group by using a cosine similarity calculation mode, wherein the similarity between the user and the user group comprises the cosine similarity.

4. The method according to any one of claims 1 to 3, wherein the acquiring, according to the similarity between the user and each user group, the at least one target user group comprises:

performing sorting on the similarity between the user and each user group in a descending order or in an ascending order, and acquiring, starting from the largest similarity, at least one target similarity which is largest;

acquiring, according to the at least one target similarity, at least one corresponding target user group.

5. The method according to claims 1 to 4, wherein a number of target user groups is determined according to the recommendation page.

6. The method according to any one of claims 1 to 5, wherein the acquiring the label data of the user comprises:

acquiring, upon reception of a page acquisition request carrying identity information of the user, historical consumption data of the user according to the identity information of the user;

acquiring the label data of the user according to the historical consumption data.

7. The method according to any one of claims 1 to 5, wherein the acquiring the label data of the user comprises:

acquiring the historical consumption data of the user according to the identity information, of the user who subscribes to page recommendation, in page recommendation subscription information;

acquiring the label data of the user according to the historical consumption data.

8. The method according to any one of claims 1 to 7, further comprising:

acquiring, according to channel information visited by the user, the recommendation page corresponding to the channel information, wherein at least one page module is displayable on the recommendation page.

9. The method according to any one of claims 1 to 8, further comprising:

acquiring, according to labeled user data, a label feature vector of each user, wherein the label feature vector comprises a plurality of labels corresponding to the user;

clustering users according to the feature vector of each user to obtain a plurality of user groups;

for each user group, calculating, according to the feature vector of each user in the user group, feature information corresponding to the user group by using a Continuous Bag-of-Words CBOW model.

10. The method according to claim 9, further comprising:

performing page module configuration according to clustering attributes of a plurality of products, to obtain a plurality of page modules;

establishing and storing, according to the feature information of each user group, a mapping relationship between the page module and the user group.

11. The method according to claim 10, wherein the acquiring the at least one page module corresponding to the at least one target user group comprises:

acquiring, according to the mapping relationship between the page module and the user group, the at least one page module corresponding to the at least one target user group.

12. A user feature-based page displaying apparatus, comprising:

an acquiring module, configured to acquire label data of a user, wherein the label data is used to represent a feature of the user;
a processing module, configured to calculate, according to the label data, a similarity between the user and each user group acquired in advance; wherein each user group is used to represent a class of users;
the processing module is further configured to acquire at least one target user group according to the similarity between the user and each user group, wherein a similarity between the at least one target user group and the user is greater than a similarity between another user group and the user;
the processing module is further configured to acquire at least one page module corresponding to the at least one target user;
an interaction module, configured to display the at least one page module on a recommendation page corresponding to the user, wherein each page module comprises information of at least one product.

13. An electronic device, comprising:

a processor, a memory, and an interface;
wherein the memory is configured to store executable instructions of the processor;
and wherein the processor is configured to execute the user feature-based page displaying method described in any one of claims 1 to 11 by executing the executable instructions.

14. A storage medium on which a computer program is stored, wherein when the computer program is executed by a processor, the user feature-based page displaying method described in any one of claims 1 to 11 is implemented.

15. A chip, comprising: a memory and a processor, wherein the memory stores codes and data, the memory is coupled with the processor, and the processor runs a program in the memory, so that the chip is configured to perform the user feature-based page displaying method described in any one of claims 1 to 11.

16. A program product, comprising: a computer program, wherein the program product, when running on a computer, causes the computer to execute the user feature-based page displaying method described in any one of claims 1 to 11.

Acquiring label data of a user, where the label data is used to represent a feature of the user — S101

↓

Calculating, according to the label data, a similarity between the user and each user group acquired in advance; where each user group is used to represent a class of users — S102

↓

Acquiring at least one target user group according to the similarity between the user and each user group, where a similarity between the at least one target user group and the user is greater than a similarity between another user group and the user — S103

↓

Acquiring at least one page module corresponding to the at least one target user group — S104

↓

Displaying the at least one page module on a recommendation page corresponding to the user, where each page module includes information of at least one product — S105

FIG. 1

Selected product

> Page module 1

Hot selling product

> Page module 2

Highly praised product

> Page module 3

FIG. 2

| User A | User B | User C | User N |

Identity information of purchasing users

Page modules corresponds to order users

DMP user profile data storage table

Acquire a user label

0.99, 0.21, 0.23, 0.67, 0.39 ······0.85

0.09, 0.41, 0.63, 0.97, 0.19 ······0.72

0.55, 0.26, 0.83, 0.77, 0.80 ······0.15

Data representation based on both user data and channel characteristics

Similarity calculation

Display the page modules dynamically according to the similarity

FIG. 3

Acquiring, according to labeled user data, a label feature vector of each user, where the label feature vector includes a plurality of labels corresponding to the user — S201

Clustering users according to the label feature vector of each user to obtain a plurality of user groups — S202

For each user group, calculating, according to the label feature vector of each user in the user group, feature information corresponding to the user group by using a CBOW model — S203

FIG. 4

EP 4 198 864 A1

| Module N1 | → | User group U={insensitive to promotion, moderately sensitive to product evaluation, senior office lady, the post-80s generation, male, married} |

Module N2

$B=\{b1, b2, b3, \cdots bj\}$     j features

Each feature is mapped to i dimension

User group is expressed as i*j dimension

······

Module Nm

1,0,0,0,0,0,0,0,0,0······0,1,0,0,0,0,0,0,0,0······0,0,0,0,0,0,0,0,0,0······1

FIG. 5

$B=\{b1, b2, b3, \cdots\cdots bj\}$

$b1=\{1,0,0,0,0,0,\cdots,0\}$
$b2=\{0,1,0,0,0,0,\cdots,0\}$
Target $b3=\{0,0,1,0,0,0,\cdots,0\}$
$b1=\{0,0,0,0\cdots1,\cdots,0\}$

Input layer     Hidden layer     Output layer

FIG. 6

Performing page module configuration according to clustering attributes of a plurality of products, to obtain a plurality of page modules — S204

Establishing and storing, according to feature information of each user group, a mapping relationship between the page module and the user group — S205

FIG. 7

10

Acquiring
module — 11

Processing
module — 12

Interaction
module — 13

FIG. 8

Electronic device 20

Memory22    Processor21

Bus 24

Interface23

FIG. 9

## INTERNATIONAL SEARCH REPORT

| International application No. |
| --- |
| **PCT/CN2021/112612** |

| **A.** | **CLASSIFICATION OF SUBJECT MATTER** |
| --- | --- |

G06Q 30/06(2012.01)i

According to International Patent Classification (IPC) or to both national classification and IPC

| **B.** | **FIELDS SEARCHED** |
| --- | --- |

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNPAT, CNKI, WPI, EPODOC: 北京沃东天骏信息技术有限公司, 产品, 商品, 广告, 推荐, 用户, 标签数据, 特征数据, 消费数据, 相似度, 群, 类, 页面, product?, commodit???, advertising, recommend+, label?, feature?, consum+, data, user?, group?, class??, page

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| PX | CN 112258260 A (BEIJING WODONG TIANJUN INFORMATION TECHNOLOGY CO., LTD.) 22 January 2021 (2021-01-22)<br>claims 1-14, description paragraphs [0065]-[0184], figures 1-9 | 1-16 |
| Y | CN 109784973 A (PING AN LIFE INSURANCE COMPANY OF CHINA, LTD.) 21 May 2019 (2019-05-21)<br>description, paragraphs [0036]-[0187], and figures 1-11 | 1-16 |
| Y | CN 106548255 A (SHANDONG INSPUR CLOUD SERVICE INFORMATION TECHNOLOGY CO., LTD.) 29 March 2017 (2017-03-29)<br>description, paragraphs [0013]-[0026] | 1-16 |
| A | CN 108960945 A (BEIJING JINGDONG SHANGKE INFORMATION TECHNOLOGY CO., LTD. et al.) 07 December 2018 (2018-12-07)<br>entire document | 1-16 |
| A | CN 110363617 A (BEIJING SCIENCE AND TECHNOLOGY CO., THREE FAST ONLINE) 22 October 2019 (2019-10-22)<br>entire document | 1-16 |

☑ Further documents are listed in the continuation of Box C.    ☑ See patent family annex.

| | |
| --- | --- |
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **22 October 2021** | **17 November 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/112612**

| C. | DOCUMENTS CONSIDERED TO BE RELEVANT | |
|---|---|---|
| Category* | Citation of document, with indication, where appropriate, of the relevant passages | Relevant to claim No. |
| A | CN 109658206 A (BOE TECHNOLOGY GROUP CO., LTD.) 19 April 2019 (2019-04-19)<br>entire document | 1-16 |
| A | JP 4822317 B2 (KDDI CORPORATION) 24 November 2011 (2011-11-24)<br>entire document | 1-16 |
| A | CN 109783730 A (SHENZHEN ONECONNECT TECHNOLOGY CO., LTD.) 21 May 2019<br>(2019-05-21)<br>entire document | 1-16 |

## INTERNATIONAL SEARCH REPORT
### Information on patent family members

International application No.

**PCT/CN2021/112612**

| Patent document cited in search report | | | Publication date (day/month/year) | Patent family member(s) | | | Publication date (day/month/year) |
|---|---|---|---|---|---|---|---|
| CN | 112258260 | A | 22 January 2021 | None | | | |
| CN | 109784973 | A | 21 May 2019 | None | | | |
| CN | 106548255 | A | 29 March 2017 | None | | | |
| CN | 108960945 | A | 07 December 2018 | None | | | |
| CN | 110363617 | A | 22 October 2019 | None | | | |
| CN | 109658206 | A | 19 April 2019 | WO | 2020147720 | A1 | 23 July 2020 |
| | | | | US | 2021065218 | A1 | 04 March 2021 |
| JP | 4822317 | B2 | 24 November 2011 | JP | 2007102407 | A | 19 April 2007 |
| CN | 109783730 | A | 21 May 2019 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010819808